# EUROPEAN PATENT APPLICATION

(11) **EP 1 742 092 A1**
(43) Date of publication of application: **10.01.2007**
(21) Application number: 05291486.8
(22) Date of filing: 04.07.2005
(51) Int. Cl.: G02B 6/34, G01J 9/02

(54) **Measuring method for measuring the detuning of an optical signal, measuring device, optical transmitter and optical module**

(71) Applicant: ALCATEL, 75008 Paris (FR)
(72) Inventor: Pfeiffer, Thomas, Dr., 70569 Stuttgart (DE); Freude, Wolfgang, Prof. Dr., 6199 Karlsruhe (DE); Vandewege, Jan, Prof. Gent University UG Intec, 9000 Gent (BE); Leuthold, Jürg, Prof., 76297 Stutensee-Spöck (DE)
(74) Representative: Brose, Gerhard

(57) **Abstract**

The invention relates to a measuring method for measuring the detuning of an optical signal, that is to be located within a given wavelength band (PB), in which the signal is fed to one input (n, f) of a Mach-Zehnder device (MZ), that is dimensioned such that a signal being at one edge of the wavelength band shows a maximum value at one output of the Mach-Zehnder device, that a signal being at the other edge of the wavelength band shows a maximum value at the other output of the Mach-Zehnder device and that in between the difference between the values at both outputs rises or falls continuously, and that this difference is used as a measure for the detuning of the optical signal, as well as a measuring device, an optical transmitter and an optical module.

## Description

The invention relates to a measuring method for measuring the detuning of an optical signal, according to the preamble of claim 1, a measuring device according to the preamble of claim 2, and an optical transmitter according to the preamble of claim 3.

In the access area of telecommunication systems, where optical transmission is used, monitoring of the wavelength drift will become essential. Transmitter lasers in such an area are subject to ageing and temperature induced wavelength drifts. The invention starts from dealing with a network with a wavelength allocation scheme with 20 nm wide wavebands. On either side of such a waveband there are edges between pass band and stop band that take up some 3 - 3.5 nm. This means that for the operation remains only some 13 - 14 nm. Typical DFB laser drifts over the temperature range -40° ... + 85°C lie in the range of 12.5 nm. This means that there is practically no tolerance left for manufacturing or ageing.

Similar problems occur in systems with other specifications and therefore are of general interest. The solution given below of course also is of general scope.

The problem now is to provide a basis for tuning the optical source such that the optical signal remains within the pass band.

According to the invention this problem is solved by a measuring method according to the teaching of claim 1, a measuring device according to the teaching of claim 2, and an optical transmitter according to the teaching of claim 3.

The invention uses the sinusoidal characteristic of a Mach-Zehnder device and especially uses the quasi-linear part of one falling or raising slope thereof.

Further embodiments are to be found in the subclaims and in the following description.

In the following the invention will be described with reference to the accompanying drawings:
- Figure 1: shows a part of the access area of a telecommunication system including an optical transmitter or an optical module according to the invention.
- Figure 2: shows wavelength bands occurring in the access area shown in figure 1.
- Figure 3: shows part of an optical module according to the invention including a measuring device according to the invention.
- Figure 4: is similar to figure 3 and shows the modifications necessary when one has different fibers for both directions.
- Figures 5a to 5c: show diagrams for explaining the invention.

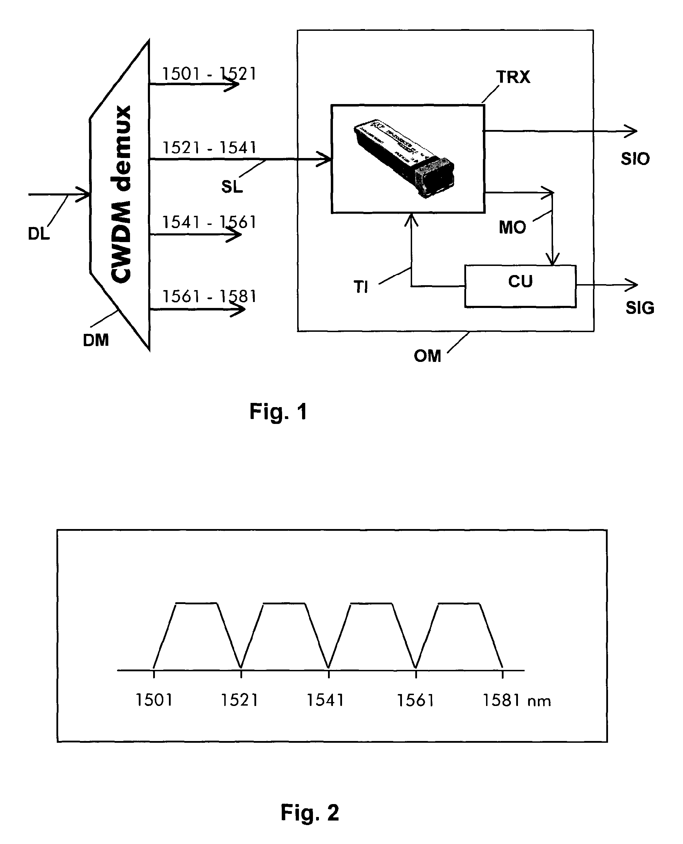

Figure 1 shows a CWDM demultiplexer DM and an optical module OM. The demultiplexer DM has one input connected to a distribution line DL and four outputs connected each with a subscriber line, one of which is denoted SL. The optical module OM includes an optical transceiver TRX and a control unit CU. The transceiver TRX is connected with the subscriber line SL, with a signal input and output line SIO, with a measuring output line MO and with a tuning input line TI. The control unit CU is connected with the measuring output line MO, the tuning input line TI, and a signaling line Sig. In contrast to how it is shown in figure 1, the invention expects, that the whole optical module OM is integrated into what is shown here as transceiver TRX.

What is shown in an overview in figure 1 will be described in more details with reference to the following figures.

Figure 2 shows the pass bands of the CWDM demultiplexer DM of figure 1. In principle this is the characteristic of a filter bank with four pass band filters identical in shape, but dislocated one against the other by the width of one single pass band filter. Each path band filter clearly shows a rising edge and a falling edge as described in the introductory part. As this CWDM demultiplexer DM works with passive elements, in the upstream direction it works as a multiplexer.

Of course in reality we have filter banks with more than four such filters.

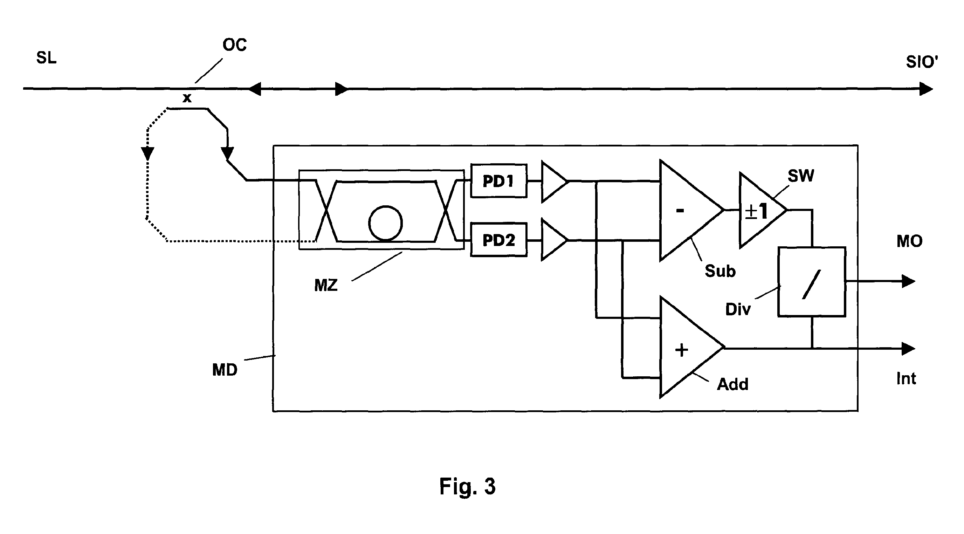

Figure 3 shows a part of an optical module according to the invention, including a measuring device MD according to the invention.

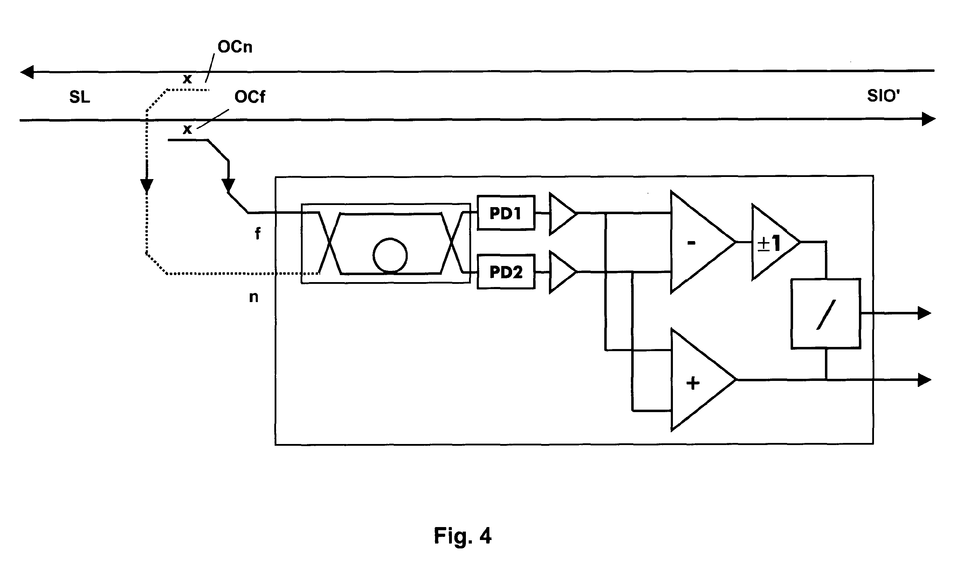

The continuous optical line shown at the top of this figure connects the subscriber line SL with the signal input and output line SIO'. Here in contrast to figure 1 the signal input and output line is denominated SIO' instead of SIO and is shown as being an optical line like the subscriber line SL. That is because figure 3 (and figure 4) shows only what is necessary to understand the invention. Of course those parts not shown here in detail nevertheless are necessary.

An optical coupler OC drops a signal either from the far end to a far-end input f (solid line) of the measuring device MD or from the near end to a near-end input n (dotted) of the measuring device MD or both.

The measuring device MD includes a Mach-Zehnder device MZ, two photo diodes, PD1 and PD2, with a following amplifier each, a subtracter Sub, an adder Add, a switch SW, and a divider Div.

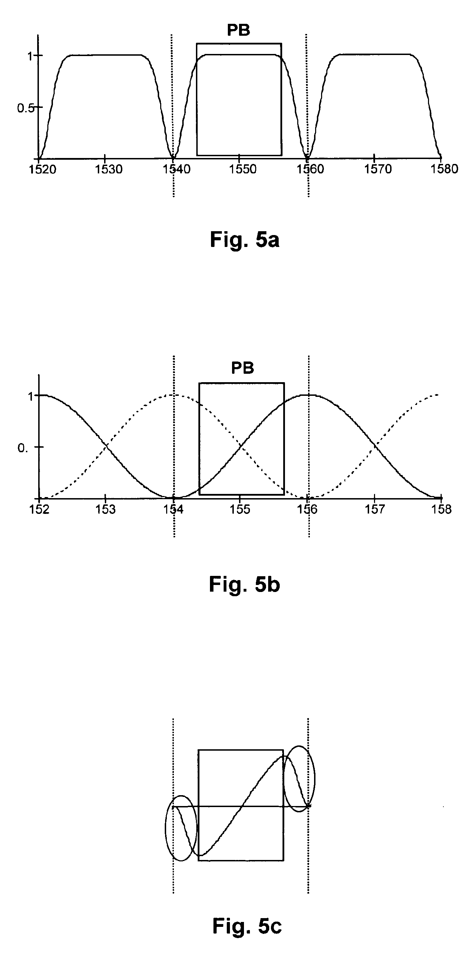

The Mach-Zehnder device MZ is built in the usual manner with two optical couplers and a delay element in either of the connections between the two couplers. In the given example the delay element should bring an optical delta of 60 micrometer. Than an input signal swept over the considered wavelength range will result in an output signal at either output with a sinusoidal behavior and a period of 40 nm at 1540 nm. The period of 40 nm will become clearer in connection with the description of figure 5. For other wavelengths and other band widths the necessary values will become obvious to a person skilled in the art.

It is to be noted here that the mentioned periodicity is not really given in the wavelength range, but in the frequency range. As long as one works only within one pass band as shown in figure 2, that does not matter. Otherwise maybe it will have to be taken into account.

The two photo diodes, PD1 and PD2 in connection with the two amplifiers perform the conversion into electrical signals.

The subtractor Sub builds the difference between the amplitudes at the two outputs of the Mach-Zehnder device MZ.

The switch SW gives the possibility to invert the signal output by the subtractor Sub. With this one can achieve that the output characteristic of the subtractor over the wavelength has the same slope in each wavelength band. Without this one would have falling slopes in every other band and raising slopes in between. This will become clearer when reading the description concerning figure 5b. Of course such inversion or not inversion can be made fixed instead of switchable, when considering only one wavelength band. And it is possible to do it elsewhere.

The adder Add adds the amplitudes at the two outputs of the Mach-Zehnder device MZ, thus building a value indicating the total power Int of the measured signal. If necessary, such value can be output for other purposes.

The divider Div divides the output value of the switch SW by the output value of the adder Add and thus normalizes the result. This value is given to the measuring output line MO.

Back to figure 1 shows what may be done with the value output on the measuring output line MO. This value is input into the control unit CU.

When one wants to tune the laser in the transmitter part of the optical transceiver TRX one has to measure via the near-end input n as shown in figure 3. Of course it is to be ensured, that during such measuring there will be no input signal at the far-end input f. Then the control unit CU has to prepare a signal to be given to the tuning input line of the transceiver part to directly tune its laser. If necessary such preparation has to include holding the value between two subsequent measurements.

When one wants to tune the laser in the far end, one has to measure via the far-end input f as shown in figure 3. Of course it is to be ensured, that during such measuring there will be no input signal at the near-end input n. Then the control unit CU has to prepare a signal to be given to the signaling line Sig. Such signal may be a protocol sequence to be sent to the far end via the normal data channel led through the signal input and output line SIO.

Figure 4 shows a situation slightly different from that of figure 3. Here both, the subscriber line SL, and the signal input and output line SIO', are fiber pairs with one fiber for each direction. In this case, depending on whether one wants to measure the detuning of the laser at the near end or that of the far end or both, one needs either an optical coupler OCn in the outgoing fiber or an optical coupler OCf in the coming fiber or both. Of course one has to drop the signal at the output in the direction away from the laser. The rest is the same as in figure 3.

The invention will now be explained further with reference to figures 5a to 5c.

Figure 5a shows schematically the characteristic of a filter with three adjacent pass bands in a more realistic presentation than in figure 2. The wavelength band considered here is depicted as a rectangle and denominated as PB. We consider here the flat-top region, sometimes also called "Clear Window".

Figure 5b shows the situation at the output of the Mach-Zehnder device MZ under the assumption that there is no band filtering in front of the Mach-Zehnder device MZ. The characteristics at both outputs show sine waves each, solid and dotted line, respectively. (This has nothing to do with the solid and dotted lines in figures 3 and 4). Both sine waves have a phase difference between each other of 180°. There is another phase difference of 180° between the considered band and the two adjacent ones. That is why the switch SW as described in connection with figure 3 is foreseen. Thus for further processing the signals output from the Mach-Zehnder device MZ one can always establish the same situation.

Finally figure 5c shows the difference between the two characteristics shown in figure 5b, multiplied by the characteristic shown in figure 5a. That is the situation at the output of the subtractor Sub as described in connection with figure 3, when measuring an optical signal coming from the far end. Without band limiting the input signal, especially when measuring the near-end signal, there are no such deep slopes as within the ellipses in figure 5c.

From figure 5c it is obvious that one obtains with such measuring a good starting point for readjusting a detuned laser.

## Claims

1. Measuring method for measuring the detuning of an optical signal, that is to be located within a given wavelength band (PB), **characterized in, that** the signal is fed to one input (n, f) of a Mach-Zehnder device (MZ), that is dimensioned such that a signal being at one edge of the wavelength band shows a maximum value at one output of the Mach-Zehnder device, that a signal being at the other edge of the wavelength band shows a maximum value at the other output of the Mach-Zehnder device and that in between the difference between the values at both outputs rises or falls continuously, and that this difference is used as a measure for the detuning of the optical signal.

2. Measuring device (MD) for measuring the detuning of an optical signal, that is to be located within a given wavelength band (PB), **characterized in, that** it includes a Mach-Zehnder device (MZ) and a signal path from an input of the measuring device (MD) to one input of the Mach-Zehnder device (MZ), that the Mach-Zehnder device (MZ) is dimensioned such that a signal being at one edge of the wavelength band shows a maximum value at one output of the Mach-Zehnder device, that a signal being at the other edge of the wavelength band shows a maximum value at the other output of the Mach-Zehnder device and that in between the difference between the values at both outputs rises or falls continuously and that difference building means (Sub, Add, SW, Div) are provided to output a value (MO) representing such difference and that an output of said difference building means is connected to an output of the measuring device for presenting a value as a measure for the detuning of the optical signal.

3. Optical transmitter (TRX) with transmitting means for transmitting a first optical signal, that is to be located within a given wavelength band (PB) and with tuning means for tuning the wavelength of said first optical signal, **characterized in, that** it includes a measuring device (MD) for measuring the detuning of said first optical signal, that said measuring device (MD) includes a first Mach-Zehnder device (MZ) and a first signal path from an input of the measuring device to one input of the first Mach-Zehnder device (MZ), that the first Mach-Zehnder device (MZ) is dimensioned such that a signal being at one edge of the wavelength band shows a maximum value at one output of the first Mach-Zehnder device (MZ), that a signal being at the other edge of the wavelength band shows a maximum value at the other output of the first Mach-Zehnder device (MZ) and that in between the difference between the values at both outputs rises or falls continuously, that first difference building means (Sub, Add, SW, Div) are provided to output a value (MO) representing such difference and that an output of said difference building means is connected to an input of said tuning means.

4. Optical module (OM) with receiving means for receiving a second optical signal, that should be located within a given wavelength band, and with transmitting means for transmitting a first optical signal, **characterized in, that** it includes a measuring device (MD) for measuring the detuning of said second optical signal, that said measuring device includes a second Mach-Zehnder device (MZ) and a second signal path from an input of the measuring device to one input of the second Mach-Zehnder device (MZ), that the second Mach-Zehnder device (MZ) is dimensioned such that a signal being at one edge of the wavelength band shows a maximum value at one output of the second Mach-Zehnder device, that a signal being at the other edge of the wavelength band shows a maximum value at the other output of the second Mach-Zehnder device (MZ) and that in between the difference between the values at both outputs rises or falls continuously, that second difference building means (Sub, Add, SW, Div) are provided to output a value (MO) representing such difference and that signaling means (CU) are provided to provide a report (SIG) to be sent via said transmitting means.

5. Optical module (OM) according to claim 4, **characterized in, that** the transmitting means further include tuning means for tuning the wavelength of said first optical signal, that it further includes a measuring device (MD) for measuring the detuning of said first optical signal, that said measuring device includes a second Mach-Zehnder device (MZ) and a second signal path from an input of the measuring device to one input of the second Mach-Zehnder device, that the second Mach-Zehnder device (MZ) is dimensioned such that a signal being at one edge of the wavelength band shows a maximum value at one output of the second Mach-Zehnder device (MZ), that a signal being at the other edge of the wavelength band shows a maximum value at the other output of the second Mach-Zehnder device (MZ) and that in between the difference between the values at both outputs rises or falls continuously, that difference building means (Sub, Add, SW, Div) are provided to output a value representing such difference and that an output of said difference building means is connected (TI) to an input of said tuning means.

6. Optical module according to claim 5, **characterized in, that** there is only one Mach-Zehnder device (MZ) functioning both, as the first Mach-Zehnder device (MZ) and as the second Mach-Zehnder device (MZ), that the first signal path leads to either input of this Mach-Zehnder device (MZ) and that the second signal path leads to the other input of this Mach-Zehnder device (MZ).
